# EUROPEAN PATENT APPLICATION

(11) **EP 2 180 662 A2**
(43) Date of publication of application: **28.04.2010**
(21) Application number: 09155401.4
(22) Date of filing: 17.03.2009
(51) Int. Cl.: H04L 29/08, G06F 21/00, H04L 29/06

(54) **Network communication method, dispatch server and server**

(30) Priority: 01.10.2008 TW 97137751
(71) Applicant: Avermedia Technologies, Inc., Taipei (TW)
(72) Inventor: Hu, Jhao-Dong, Taipei Hsien (TW); Chen, Chun-Hao, Taipei Hsien (TW); Tsao, Heng-Zong, Taipei Hsien (TW)
(74) Representative: Lang, Christian

(57) **Abstract**

A network communication method comprises the following steps: a log-in account is acquired from a client (400); a server list is queried to obtain on-line data of a local server (500) according to the login account, wherein the local server (500) and the client (400) are in the same domain; the client (400) is directed to the local server (500) according to the on-line data of the local server (500). Moreover, a dispatch server and a server (300) are disclosed in specification.

## Description

### RELATED APPLICATIONS

This application claims priority to Taiwan Application Serial Number 97137751, filed October 01, 2008, which is herein incorporated by reference.

### BACKGROUND

### Field of Invention

The present invention relates to a packet switching data network. More particularly, the present invention relates to a packet switching data network characterized in routes.

### Description of Related Art

General network architecture has one database server to provide access. Web sites set up many servers to share the traffic. However, the servers still access the same database. In addition, for security reasons, the database is usually configured to access the server, wherein the server and the database are in the same local area network (LAN). Therefore, the server is only added in the local area network in which the database is situated.

If servers are set up in different local area networks, one server of one local area network cannot acquire data from the database of another local area network. Moreover, if the databases of various local area networks store data respectively, it is hard for a user to choose which server to acquire data.

For the foregoing reasons, there is a need for a network communication methods and application thereof whereby the servers could be set up in different LAN.

### SUMMARY

The following presents a simplified summary of the disclosure in order to provide a basic understanding to the reader. This summary is not an extensive overview of the disclosure and it does not identify key/critical elements of the present invention or delineate the scope of the present invention. Its sole purpose is to present some concepts disclosed herein in a simplified form as a prelude to the more detailed description that is presented later.

It is therefore one or more aspects of the present invention to provide one or more network communication methods and application thereof.

In accordance with an embodiment of the present invention, a network communication method comprises the following steps: a log-in account is acquired from a client; a server list is queried to obtain on-line data of a local server according to the login account, wherein the local server and the client are in the same domain; the client is directed to the local server according to the on-line data of the local server.

In accordance with another embodiment of the present invention, another network communication method comprises the following steps: an access request is acquired from a client for ad hoc data; whether the ad hoc data is stored in a local database is determined; a dispatch server is asked to obtain on-line data of a service server when the ad hoc data is not stored in the local database, wherein the service server manages the ad hoc data; the client is directed to the service server to access the ad hoc data according to the on-line data of the service server.

In accordance with another embodiment of the present invention, a dispatch server comprises a log-in account acquiring unit, a database, an on-line acquiring unit and a directing unit. The log-in account acquiring unit can acquire a log-in account from a client; the database can store a server list; the on-line acquiring unit can query the server list to obtain on-line data of a local server according to the login account, wherein the local server and the client are in the same domain; the directing unit can direct the client to the local server according to the on-line data of the local server.

In accordance with another embodiment of the present invention, a server comprises an access request acquiring unit, a data determining unit, an on-line inquiring unit and a directing unit. The access request acquiring unit can acquire an access request from a client for ad hoc data; the data determining unit can determine whether the ad hoc data is stored in a local database, wherein the server and the local database are in the same domain; the on-line inquiring unit can ask a dispatch server to obtain on-line data of a service server when the ad hoc data is not stored in the local database, wherein the service server manages the ad hoc data; the directing unit can direct the client to the service server to access the ad hoc data according to the on-line data of the service server.

It is to be understood that both the foregoing general description and the following detailed description are by examples, and are intended to provide further explanation of the invention as claimed.

### BRIEF DESCRIPTION OF THE DRAWINGS

For a more complete understanding of the present invention, and the advantages thereof, reference is now made to the following descriptions taken in conjunction with the accompanying drawing, in which:
Fig. 1 is a flow chart of a network communication method 100 according to an embodiment of the present disclosure;
Fig. 2 is a flow chart of another network communication method 200 according to another embodiment of the present disclosure;
Fig. 3 is a block diagram of a dispatch server 300 according to another embodiment of the present disclosure;
Fig. 4 is a block diagram of a server 700 according to another embodiment of the present disclosure; and
Fig. 5 shows an on-line data module of Fig. 4.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

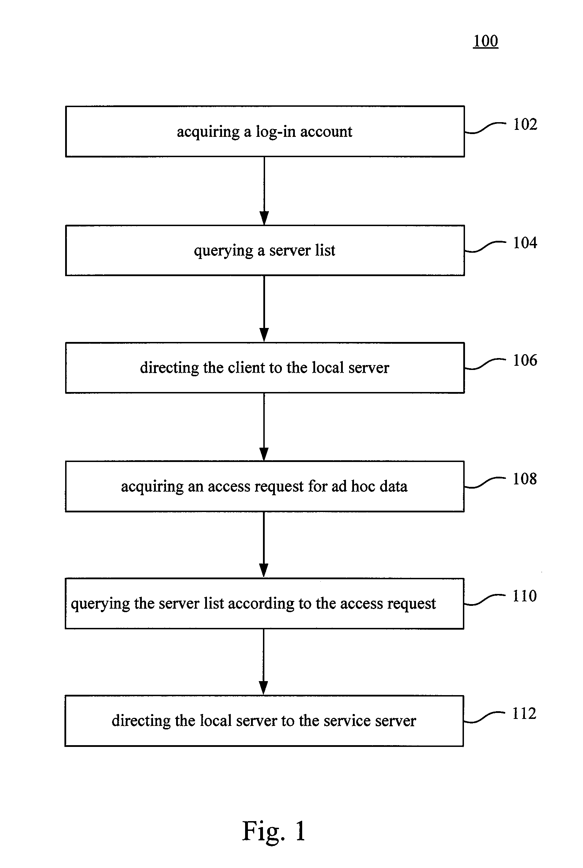

Please refer to Fig. 1. Fig. 1 is a flow chart of a network communication method 100 according to an embodiment of the present disclosure. The network communication method 100 can direct the client to the local server according to the domain in which the client is situated. In Fig. 1, the network communication method 100 comprises step 102, step 104 and step 106. In the network communication method 100, it should be noted that one step might be performed in series, in parallel, in combination, or otherwise in conjunction with another if the specific order is not described or inferred in the embodiment.

In step 102, a log-in account is acquired from a client; in step 104, a server list is queried to obtain on-line data of a local server according to the login account, wherein the local server and the client are in the same domain; in step 106, the client is directed to the local server according to the on-line data of the local server.

The server list stores a plurality of on-line data of servers; thus, the network communication method 100 can direct the client to the local server without that the client knowing the local server beforehand.

Moreover, the network communication method 100 can direct the local server to another server. In Fig. 1, the network communication method 100 comprises step 108, step 110 and step 112.

In step 108, an access request is acquired from the local server for ad hoc data; in step 110, the server list is queried to obtain on-line data of a service server according to the access request, wherein the service server stores the ad hoc data; in step 112, the local server is directed to the service server to access the ad hoc data according to the on-line data of the service server.

Accordingly, the network communication method 100 can direct the local server to another server to access data without that that the local server stores the on-line data of another server beforehand. On the other hand, by using the network communication method 100, servers can be set in different local area networks, and the databases of the different local area networks do not need to synchronize.

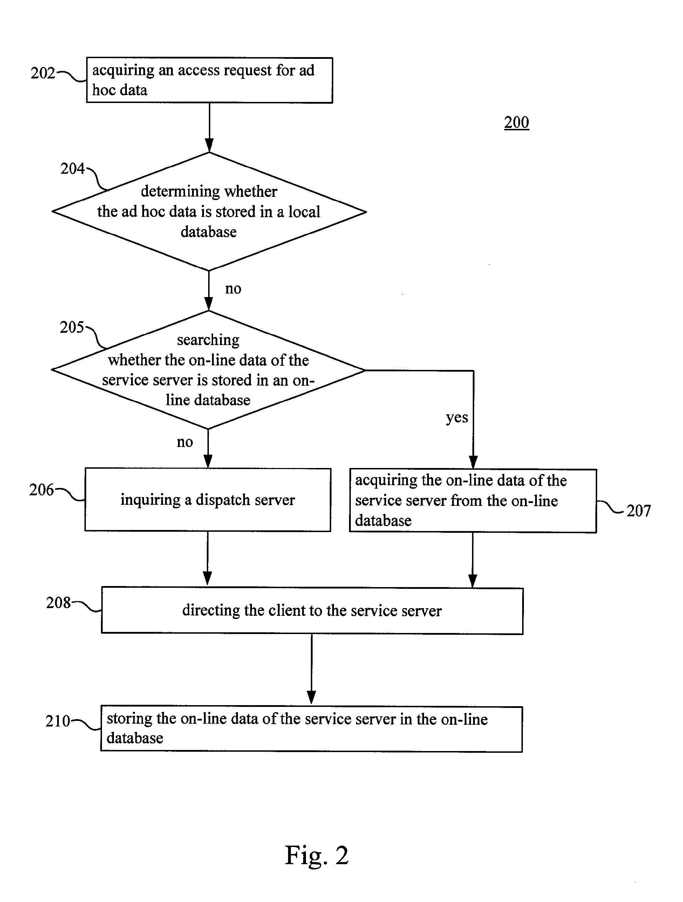

Please refer to Fig. 2. Fig. 2 is a flow chart of a network communication method 200 according to an embodiment of the present disclosure. The network communication method 200 can direct the client to a server storing data when the client wants to obtain the data. In Fig. 1, the network communication method 200 comprises step 202, step 204, step 206 and step 208. In the network communication method 200, it should be noted that one step might be performed in series, in parallel, in combination, or otherwise in conjunction with another if the specific order is not described or inferred in the embodiment.

In step 202, an access request is acquired from a client for ad hoc data; in step 204, whether the ad hoc data is stored in a local database is determined; in step 206, a dispatch server is asked to obtain on-line data of a service server when the ad hoc data is not stored in the local database, wherein the service server manages the ad hoc data; in step 208, the client is directed to the service server to access the ad hoc data according to the on-line data of the service server.

In practice, the network communication method 200 is applied in a server, wherein the server and the local server are in the same domain; therefore, the network communication method 200 can direct the client to the service server to access the ad hoc data when the ad hoc data is not stored in the local database.

Moreover, the network communication method 200 can store the obtained on-line data of the service server in an on-line database for the next use. In Fig. 2, the network communication method 200 comprises step 210. In step 210, the on-line data of the service server is stored in the on-line database.

Moreover, the network communication method 200 can search whether the on-line data of the service server is stored in the on-line database. In Fig. 2, the network communication method 200 comprises step 205 and step 207. In step 205, in the on-line database whether the on-line data of the service server is stored as searched in response to the access request before the dispatch server is inquired; in step 207, the on-line data of the service server is acquired from the on-line database when the on-line data of the service server is stored in the on-line database. Thus, the network communication method 200 can acquire the on-line data of the service server from the on-line database without acquire the on-line data of the service server from the dispatch server every time.

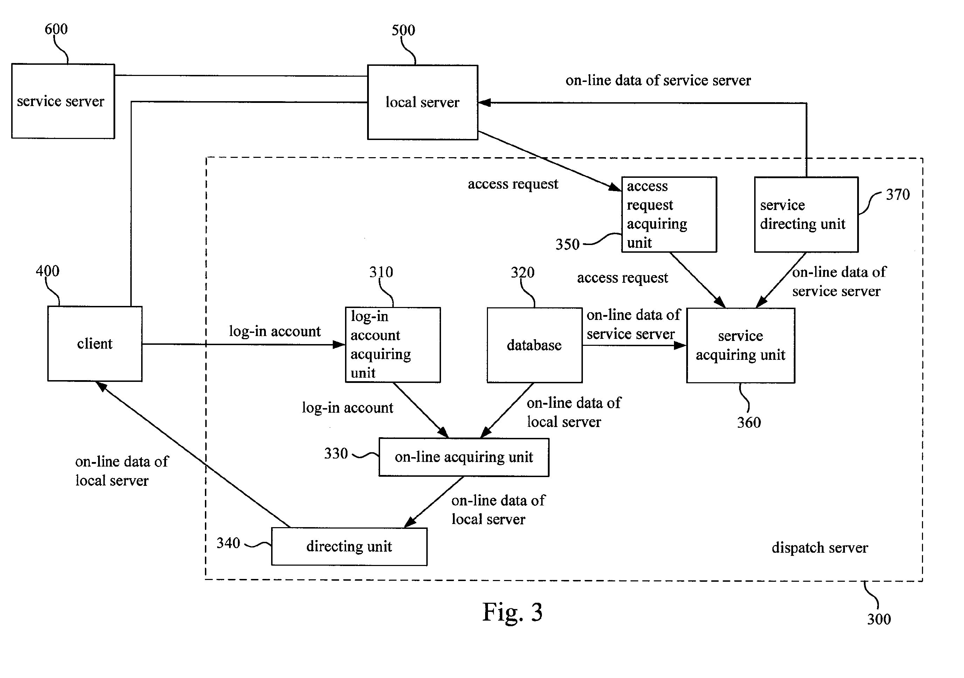

Please refer to Fig. 3. Fig. 3 is a block diagram of a dispatch server 300 according to another embodiment of the present disclosure. In Fig. 3, the dispatch server 300 comprises a log-in account acquiring unit 310, a database 320, an on-line acquiring unit 330 and a directing unit 340. The log-in account acquiring unit 310 can acquire a log-in account from a client 400; the database 320 can store a server list; the on-line acquiring unit 330 can query the server list to obtain on-line data of a local server 500 according to the login account, wherein the local server 500 and the client 400 are in the same domain; the directing unit 340 can direct the client 400 to the local server according to the on-line data of the local server 500. Thus, the dispatch server 300 can direct the client 400 to the local server 500 after the client 400 is connected to the dispatch server 300 without that the client 400 stores the on-line data of the local server 500 beforehand.

Moreover, the dispatch server 300 can direct the local server 500 to a service server 600. In Fig. 3, the dispatch server 300 comprises an access request acquiring unit 350, a service acquiring unit 360 and a service directing unit 370. The access request acquiring unit 350 can acquire an access request from the local server 500 for ad hoc data; the service acquiring unit 360 can query the server list to obtain on-line data of the service server 600 according to the access request, wherein the service server 600 stores the ad hoc data; the service directing unit 370 can direct the local server 500 to the service server 600 to access the ad hoc data according to the on-line data of the service server 600. Thus, the dispatch server 300 can direct the local server 500 to the service server 600 to access the ad hoc data without that the local server 500 stores the on-line data of the service server 600 beforehand.

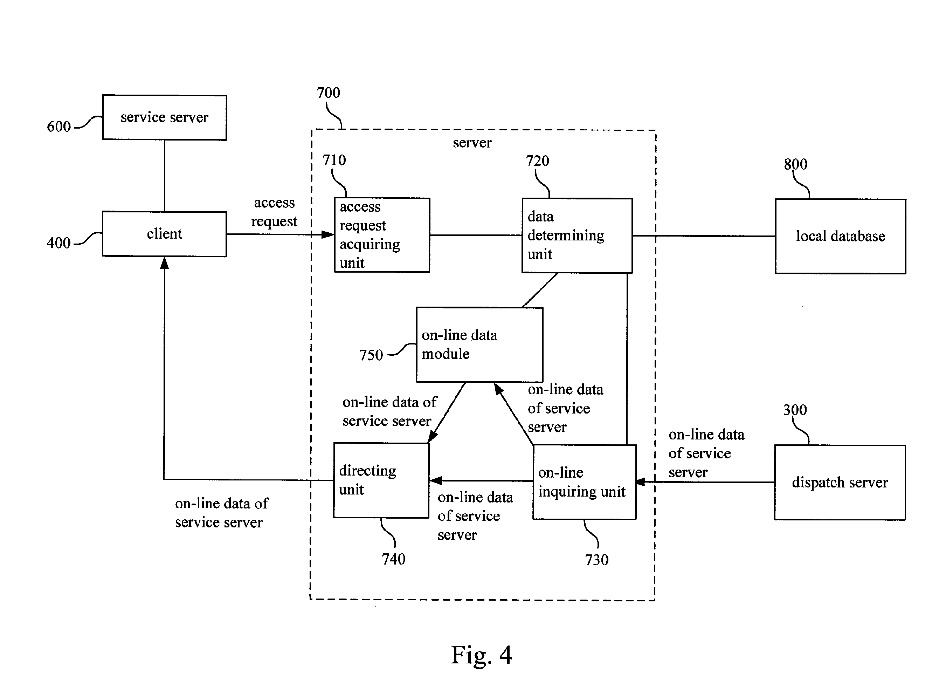

Please refer to Fig. 4. Fig. 4 is a block diagram of a server 700 according to another embodiment of the present disclosure. The server 700 can direct the client 400 to a server 600 storing ad hoc data when the ad hoc data is not stored in the server 700. In Fig. 4, the server 700 comprises an access request acquiring unit 710, a data determining unit 720, an on-line inquiring unit 730 and a directing unit 740. The access request acquiring unit 710 can acquire an access request from a client 400 for ad hoc data; the data determining unit 720 can determine whether the ad hoc data is stored in a local database 800, wherein the server 700 and the local database 800 are in the same domain; the on-line inquiring unit 730 can ask a dispatch server 300 to obtain on-line data of a service server 600 when the ad hoc data is not stored in the local database 800, wherein the service server 600 manages the ad hoc data; the directing unit 740 can direct the client 400 to the service server 600 to access the ad hoc data according to the on-line data of the service server 600. Thus, the client 400 can access the ad hoc data form the service server 600. Moreover, the server 700 can direct the client 400 to the service server 600 to access the ad hoc data through the dispatch server 300. On the other hand, the client 400 connecting the server 700 can acquire data stored in the service server 600 even if the server 700 and the service server 600 are in different domains respectively.

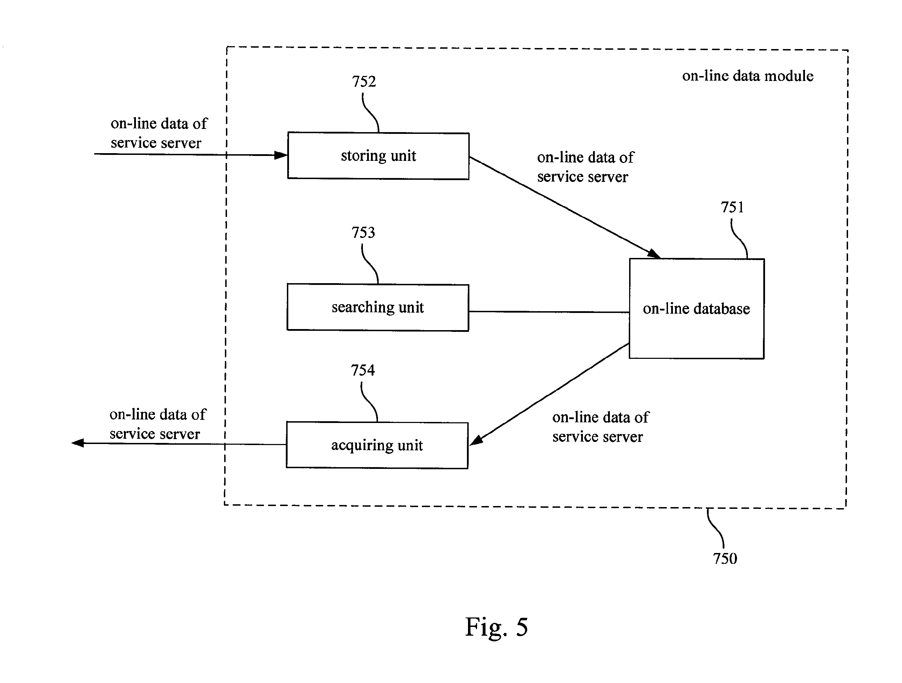

Moreover, the server 700 can store the obtained on-line data of the service server in an on-line database for the next use; therefore, the server 700 comprises an on-line data module 750. For a more complete understanding of the on-line data module 750, please refer to Fig. 5. Fig. 5 shows an on-line data module 750 of Fig. 4. In Fig. 5, the on-line data module 750 comprises an on-line database 751 and a storing unit 752. The storing unit can store on-line data of the service server 600 in the on-line database 751.

Moreover, the server 700 can search whether the on-line data of the service server is stored in the on-line database 751 before asking the dispatch server 300. In Fig. 5, the on-line data module 750 comprises a searching unit 753 and an acquiring unit 754. The searching unit 753 can search whether the ad hoc data is stored in the on-line database 751 in response to the access request before the dispatch server 300 is asked; the acquiring unit 754 can acquire the on-line data of the service server 600 from the on-line database 751 when the ad hoc data is stored in the on-line database 751. Thus, the server 700 can acquire the on-line data of the service server 600 from the on-line database 751 without acquire the on-line data of the service server 600 from the dispatch server 300 every time.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A network communication method, comprising:
acquiring a log-in account from a client;
querying a server list to obtain on-line data of a local server according to the login account, wherein the local server and the client are in the same domain; and
directing the client to the local server according to the on-line data of the local server.

2. The network communication method as claimed in claim 1, further comprising:
acquiring an access request for ad hoc data from the local server;
querying the server list to obtain on-line data of a service server according to the access request, wherein the service server stores the ad hoc data; and
directing the local server to the service server to access the ad hoc data according to the on-line data of the service server.

3. A network communication method, comprising:
acquiring an access request from a client for ad hoc data;
determining whether the ad hoc data is stored in a local database;
asking a dispatch server to obtain on-line data of a service server when the ad hoc data is not stored in the local database, wherein the service server manages the ad hoc data; and
directing the client to the service server to access the ad hoc data according to the on-line data of the service server.

4. The network communication method as claimed in claim 3, further comprising:
storing the on-line data of the service server in an on-line database.

5. The network communication method as claimed in claim 4, further comprising:
searching whether the on-line data of the service server is stored in the on-line database in response to the access request before the dispatch server is asked; and
acquiring the on-line data of the service server from the on-line database when the on-line data of the service server is stored in the on-line database.

6. A dispatch server, comprising:
means for acquiring a log-in account from a client;
means for storing a server list;
means for querying the server list to obtain on-line data of a local server according to the login account, wherein the local server and the client are in the same domain; and
means for directing the client to the local server according to the on-line data of the local server.

7. The dispatch server as claimed in claim 6, further comprising:
means for acquiring an access request from the local server for ad hoc data;
means for querying the server list to obtain on-line data of a service server according to the access request, wherein the service server stores the ad hoc data; and
means for directing the local server to the service server to access the ad hoc data according to the on-line data of the service server.

8. A server, comprising:
means for acquiring an access request from a client for ad hoc data;
means for determining whether the ad hoc data is stored in a local database;
means for asking a dispatch server to obtain on-line data of a service server when the ad hoc data is not stored in the local database, wherein the service server manages the ad hoc data; and
means for directing the client to the service server to access the ad hoc data according to the on-line data of the service server.

9. The server as claimed in claim 8, further comprising:
an on-line database; and
means for storing the on-line data of the service server in the on-line database.

10. The server as claimed in claim 8, further comprising:
means for searching whether the ad hoc data is stored in the on-line database in response to the access request before the dispatch server is asked; and
means for acquiring the on-line data of the service server from the on-line database when the ad hoc data is stored in the on-line database.
